# EUROPEAN PATENT SPECIFICATION

(11) **EP 3 025 695 B1**
(45) Date of publication and mention of the grant of the patent: **04.04.2018**
(21) Application number: 13890091.5
(22) Date of filing: 26.07.2013
(51) Int. Cl.: A61H 3/04, A61G 7/10, B25J 11/00

(54) **ASSISTANCE ROBOT**
HILFSROBOTER
ROBOT D'ASSISTANCE

(43) Date of publication of application: 01.06.2016
(73) Proprietor: Fuji Machine Mfg. Co., Ltd., Chiryu-shi, Aichi 472-8686 (JP)
(72) Inventor: NOMURA Hideaki, Chiryu-shi Aichi 472-8686 (JP); ISOZUMI Joji, Chiryu-shi Aichi 472-8686 (JP); NAKANE Nobuyuki, Chiryu-shi Aichi 472-8686 (JP)
(74) Representative: Grünecker Patent- und Rechtsanwälte PartG mbB
(86) International application number: PCT/JP2013/070390
(87) International publication number: WO 2015/011839

(56) References cited:
- JP-A- 2008 073 501
- JP-A- 2010 142 562
- JP-A- 2010 142 562
- JP-A- 2012 030 077
- JP-A- 2012 200 409
- JP-A- 2013 090 647
- JP-A- 2013 090 647
- US-A1- 2011 166 753

## Description

### Technical Field

The present invention relates to a care robot that assists a care receiver to stand up and sit down.

### Background Art

As a type of care robot, a care robot disclosed in patent literature 1 is known. As shown in figs. 3A and 3B of patent literature 1, the care robot (body assisting robot device 100) is provided with frame 110 that includes upright support member 112, horizontal direction member 130 that is slidably engaged with the upright support member, handle 132 that is slidably engaged with the horizontal direction member, raising actuator 124 that is connected to the upright support member and the horizontal direction member, and horizontal actuator 126 that is connected to the horizontal direction member and the handle. By the raising actuator advancing the horizontal direction members together and the horizontal direction actuator advancing the handles together, the user (care receiver) is assisted such that movement is possible between a standing position and a non-standing position (sitting position). Also the care robot is provided with drive motor 140, and drive motor 140 rotates drive wheel 114 to advance the care robot.

### Citation List

### Patent Literature

Patent Literature 1: JP-A-2012-030077
Patent Literature 2: JP 2010142562 A1

### Summary of Invention

### Technical Problem

The care robot disclosed in the above patent literature 1 can assist a user (care receiver) to move between a non-standing position (sitting position) and a standing position. However, when standing up and sitting down a care receiver, there are cases in which the standing up trajectory and the upper body angle used to stand up the care receiver, and the sitting down trajectory and upper body angle used to sit down the care receiver, cause the care receiver discomfort. For this problem, it could be considered to add a rotation drive axis that adjusts the upper body angle of the care receiver. However, in this case, the drive axes are increased, thus increasing the cost and size of the care robot.

Patent literature 2 discloses another transfer supporting apparatus. In order to solve the above problem, an object of the present invention is to provide a care robot that stands up and sits down a care receiver without causing discomfort and without leading to increased cost or size of the care robot.

### Solution to Problem

To solve the above problem, the present invention of a care robot comprises: a base that travels along a first axis direction using a first drive section; a robot arm section that is provided on the base an includes a second drive axis and a third drive axis which are independently driven by a second drive section and a third drive section, wherein at least one of the second drive axis and the third drive axis is a rotation drive axis that is rotated around a rotation axis extending in a horizontal direction by the second drive section; a holding section that is provided on an end of the robot arm section, rotates around the rotation drive axis, and assists a care receiver to stand up or sit down by supporting a body part of the care receiver; a storage section that stores standing up trajectory reference data which indicates the standing up trajectory along which a movement control portion of the care receiver passes when the care receiver sitting on a seat stands up being supported by the holding section, and sitting down trajectory reference data which indicates the sitting down trajectory along which a movement control portion of the care receiver passes when the stood up care receiver sits down being supported by the holding section; and a drive control section that controls the first drive section so as to move the base along the first axis direction, and simultaneously controls the second drive section and the third drive section so as to change the shape of the robot arm section, based on the standing up trajectory reference data and the sitting down trajectory reference according to the present invention.
[Fig. 2] Fig. 2 is a plan side view showing an embodiment of a care robot according to the present invention.
[Fig. 3a] Fig. 3a is a right side view showing a scheme of the internal structure of the care robot shown in fig. 1 which is in an extended state.
[Fig. 3b] Fig. 3b is a front view showing the vicinity including a first slide section shown in fig. 3a.
[Fig. 4a] Fig. 4a is a right side view showing a scheme of the internal structure of
[Fig. 4b] Fig. 4b is an end surface view taken along line 4b-4b shown in Fig. 4a.
[Fig. 4c] Fig. 4c is a front view showing the vicinity including a first slide section shown in fig. 4a.
[Fig. 5] Fig. 5 is a side view showing a state in which the care robot is close to a standing care receiver.
[Fig. 6] Fig. 6 is a side view showing a state in which the care robot is supporting a sitting care receiver.
[Fig. 7] Fig. 7 is a side view showing a state in which the care robot is supporting a standing care receiver.
[Fig. 8] Fig. 8 shows a standing up motion on the left, and a sitting down motion on the right.
[Fig. 9] Fig. 9 is a table showing relationships between XY coordinates and robot coordinates.
[Fig. 10] Fig. 10 is a schematic side view showing lengths and angles of the robot arm section.
[Fig.11] Fig. 11 is a block diagram showing the care robot shown in fig. 1.
[Fig. 12] Fig. 12 is a block diagram showing the control device shown in fig. 11.
[Fig. 13] Fig. 13 shows the standing up motion of the care robot from the top left to the bottom right. The top left shows the starting point of the standing up motion and the bottom right shows the finishing point of the standing up motion.

### Description of Embodiment

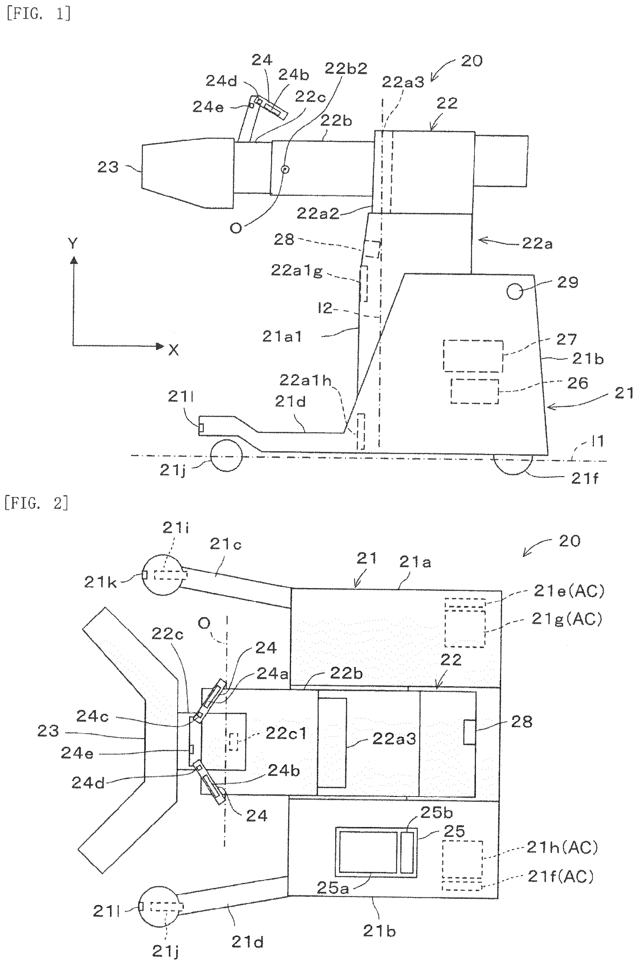

Hereinafter, an embodiment of a care robot according to the present invention will be described. Fig. 1 and fig. 2 are respectively a right side view and plan view showing care robot 20.

Care robot 20 is a care robot for assisting the standing up and sitting down of a care receiver M1 by supporting a body part (for example, the upper body, particularly, the chest) of care receiver M1. As shown in figs. 1 and 2, care robot 20 includes base 21, robot arm section 22, holding section 23, handle 24, operation device 25, storage device 26 (storage section), and control device 27.

Base 21 is provided with left/right base sections 21a and 21b, and left/right leg sections 21c and 21d. Left/right base sections 21a and 21b are provided spaced apart by a specified interval in the left/right direction, and as shown in fig. 2, left/right drive wheels 21e and 21f are respectively provided on left/right base sections 21a and 21b, and left/right drive wheel motors 21g and 21h that respectively drive left/right drive wheels 21e and 21f are internally incorporated in left/right base sections 21a and 21b. Care robot 20 travels using left/right drive wheels 21e and 21f which are respectively driven by left/right drive wheel motors 21g and 21h.

Traveling drive section AC (first drive section) is configured from left/right drive wheels 21e and 21f, and left/right drive wheel motors 21g and 21h. Base 21 is made to travel in the X-axis direction (first axis direction) by traveling drive section AC. The axis used to make base 21, which is the target object of travel, travel is traveling drive axis l1; traveling drive axis l1 extends in the X-axis direction.

Left/right leg sections 21c and 21d extend horizontally in a forward direction (left direction in figs. 1 and 2) from left/right base sections 21a and 21b. Left/right driven wheels 21i and 21j are respectively provided on an end section of left/right leg sections 21c and 21d. In addition, a pair of collision prevention sensors 21k and 211 are respectively provided on an end of the left/right leg sections 21c and 21d. Collision prevention sensors 21k and 211 are sensors for detecting an obstacle, and a detection signal thereof is transmitted to control device 27.

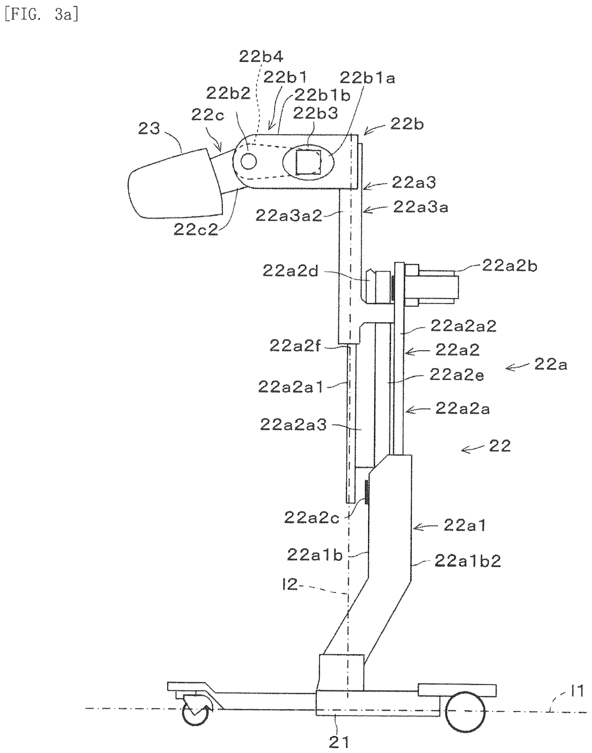

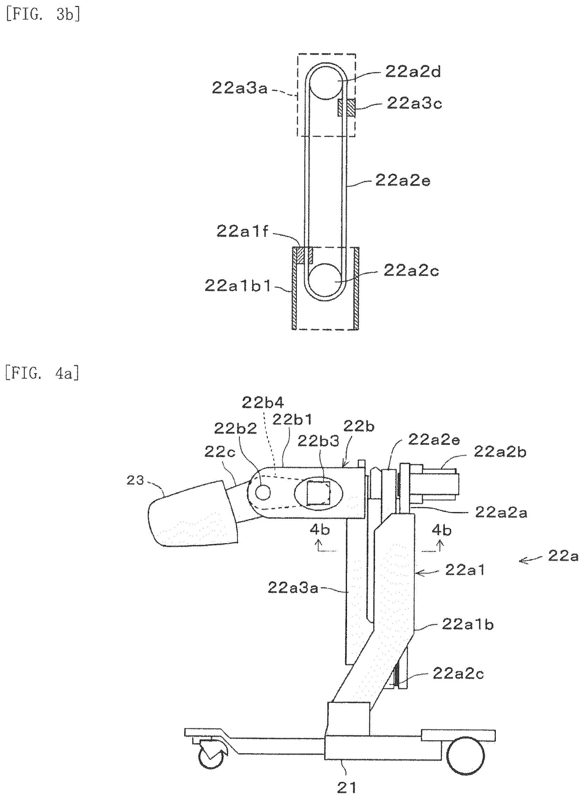

A base section of robot arm section 22 is attached to the base 21 and, as shown in figs. 3a and 4a, robot arm section 22 is provided with multiple arms 22a, 22b, and 22c which are relatively movable by using a robot arm drive section (second drive section and third drive section) configured to mainly include rotation motor 22b3 and slide motor 22a2b. That is, robot arm section 22 is provided with rotation drive axis 22b2 and slide drive axis l2 (second drive axis and third drive axis) provided on base 21 that are independently driven by rotation motor 22b3 and slide motor 22a2b (second drive section and third drive section).

At least one of the second drive section and the third drive section is a rotation drive axis that is rotated around rotation axis O which extends in a horizontal direction using the second drive section. In the present embodiment, the second drive axis is rotation drive axis 22b2 that is rotated around rotation axis O which extends in a horizontal direction using the second drive section (rotation motor 22b3), and the third drive axis is slide drive axis l2 that moves a driven body (second arm 22b to which holding section 23 is attached) back and forth using the third drive section (slide motor 22a2b) along a second axis direction (Y-axis direction) extending on the upper side of the base at a specified angle (90 degrees in the present embodiment) to the first axis direction (X-axis direction).

Note that, slide drive axis l2 is an axis that slides the driven body which is the target object to be slid. Also, the specified angle may be an angle other than 90 degrees, but it is desirable to set the angle within a range in which, considering the relationship between the total length of care robot 20 and first arm 22a, care robot 20 is prevented from falling over, and care receiver M1 can be moved along a standing up trajectory and a sitting down trajectory.

As shown in figs. 3a and 3b, and figs. 4a to 4c, a base section of first arm 22a is attached to base 21. The base section side of first arm 22a is fixed to base 21, and the entire length of first arm 22a is expandable/contractable along slide drive axis 12. First arm 22a is provided with slide base section 22a1, first slide section 22a2, and second slide section 22a3.

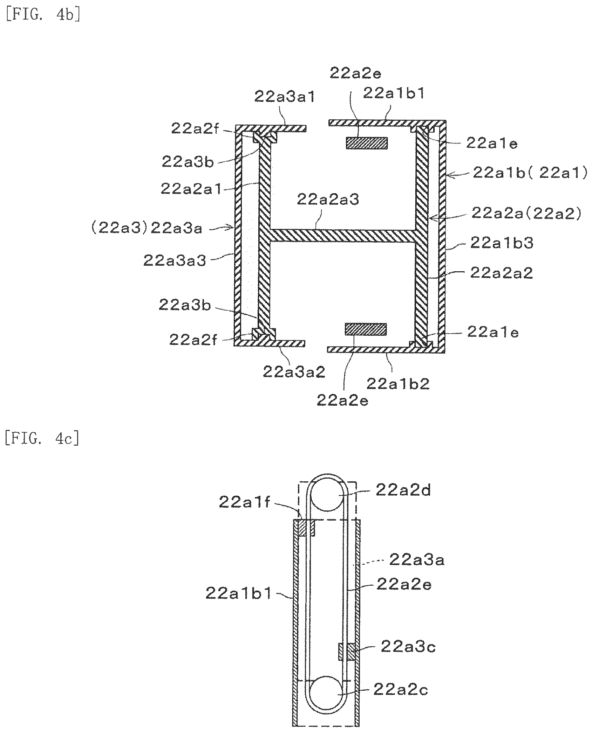

As shown in figs. 1 and 2, slide base section 22a1 is formed in a substantially rectangular cuboid shape. As shown in fig. 3a, the base end section of slide base section 22a1 is provided mainly with frame 22a1b attached to base 21. That is, slide base section 22a1 is fixed so as to extend along the second axis direction (Y-axis direction) that extends with respect to slide drive axis l2 (third drive axis). Frame 22a1b is formed with a substantially U-shaped cross section, and as shown in fig. 4b, is configured mainly from left/right plate members 22a1b1 and 22a1b2 which are formed bent, and a rear plate member 22a1b3 whose left and right ends are connected to the upper rear ends of the left/right plate members 22a1b1 and 22a1b2.

As shown in fig. 4b, a left/right guide groove 22ale that slidably engages with the left/right end of rear plate member 22a2a2 of frame 22a2a of first slide section 22a2 which is described below is formed on the inside of frame 22a1b (on the inside of left/right plate member 22a1b1 and 22a1b2). Fixed section 22a1f that is attached to and fixes slide belt 22a2e which is described below is provided on an upper section of left plate member 22a1b1 of frame 22a1b (refer to figs. 3b and 4c).

As shown in fig. 1, slide base section 22a1 is provided with knee sensor 22a1g and foot sensor 22a1h. Knee sensor 22a1g is provided facing forwards from the front of slide base section 22a1 (the left direction is the front direction in figs. 1 and 2), and is provided at a position roughly equal to the knee height of care receiver M1 sitting on the seat. Knee sensor 22a1g is a distance detecting sensor that detects the distance to a knee of care receiver M1. A detection signal of knee sensor 22a1g is sent to control device 27. The knee of care receiver M1 sitting on the seat is the reference portion of care receiver M1, and knee sensor 22a1g is the first distance detecting sensor that detects the distance to the reference portion of care receiver M1.

Foot sensor 22a1h is provided facing forwards from the front of slide base section 22a1, and is provided at a position roughly equal to the ankle height of care receiver M1 sitting on the seat. Foot sensor 22a1h is a distance detecting sensor that detects the distance to a foot of care receiver M1. A distance to a foot may be a distance to the tip of a toe or a distance to an ankle. A detection signal of foot sensor 22a1h is sent to control device 27. Foot sensor 22a1h is the second distance detecting sensor that detects the distance to a foot of care receiver M1. Note that the above distance detecting sensors 22a1g and 22a1h are, for example, laser type, LED type, or ultrasonic type sensors.

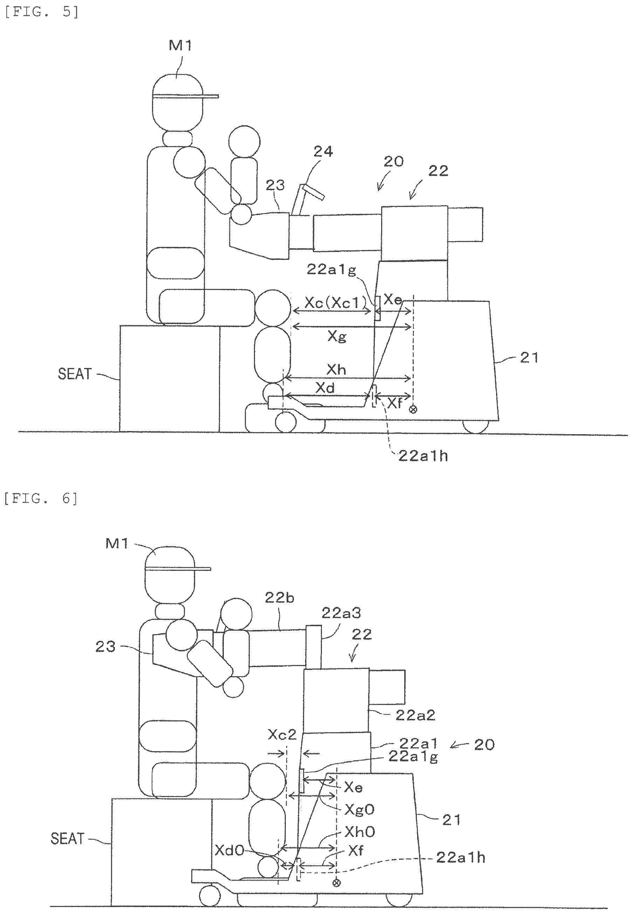

As shown in fig. 5, care robot 20 uses a detection result (distance between care robot 20 and a knee of care receiver M1) of knee sensor 22a1g, and moves to a specified position where the distance from sitting care receiver M1 becomes specified distance Xc1. The specified position is a contact stopping position at which care robot 20 which is contacting care receiver M1 stops temporarily. Then, care robot 20 moves (advances) to an optimum position (standing up optimum position) for standing up care receiver M1 (refer to fig. 6).

Note that, as shown in fig. 5, the total of the distance (measurement distance) Xc from knee sensor 22a1g to the knee, and distance Xe which is the X-axis coordinate portion from knee sensor 22a1g to a reference point of care robot 20, is the position of the knee of care receiver M1 with respect to the reference point of care robot 20. Also, the total of the distance (measurement distance) Xd from foot sensor 22a1h to the foot, and distance Xf which is the X-axis coordinate portion from foot sensor 22a1h to a reference point of care robot 20, is the position of the foot of care receiver M1 with respect to the reference point of care robot 20.

As shown in figs.1 and 2, first slide section 22a2 is formed in a substantially rectangular cuboid shape and is configured to be smaller than slide base section 22a1. First slide section 22a2 slides in a lengthwise direction (axis movement direction) with respect to slide base section 22a1, and is configured to be substantially housed inside slide base section 22a1 when contracted.

Specifically, first slide section 22a2 is provided with frame 22a2a (refer to fig. 3a). As shown in fig. 4b, frame 22a2a is formed in an H-shape in cross section and an H-shape in a side view, and is configured from front/rear plate members 22a2a1 and 22a2a2 and a connection plate member 22a2a3 whose front/rear ends are connected to a central portion in the vertical direction of front/rear plate members 22a2a1 and 22a2a2. Both the left and right ends of rear plate member 22a2a2 are slidably engaged with left/right guide groove 22a1e of frame 22a1b. As shown in fig. 3a, mainly slide motor 22a2b is provided on an upper section of rear plate member 22a2a2. Pulley 22a2c is rotatably provided on a lower section of rear plate member 22a2a2. Slide belt 22a2e is mounted around a pulley 22a2c and a pulley 22a2d of slide motor 22a2b.

As shown in fig. 4b, guide rail 22a2f is provided in both the left and right end sections of the front plate member 22a2a1 of frame 22a2a. Guide rail 22a2f slidably engages with left/right guide receiving section 22a3b on the inside of the left/right plate members of frame 22a3a of second slide section 22a3 which is described below.

As shown in figs. 1 and 2, second slide section 22a3 is formed in a substantially rectangular cuboid shape and is configured to be smaller than first slide section 22a2. Second slide section 22a3 slides in a lengthwise direction (axis movement direction) with respect to first slide section 22a2, and is configured to be substantially housed inside first slide section 22a2 when contracted.

Specifically, second slide section 22a3 is provided with frame 22a3a (refer to fig. 3a). As shown in fig. 4b, frame 22a3a is formed substantially in an H-shape in cross section and an H-shape in a side view, and is configured from left/right plate members 22a3a1 and 22a3a2 and a front/rear plate member 22a3a3 whose left/right ends are connected to the front section of left/right plate members 22a3a1 and 22a3a2. Left/right guide receiving section 22a3b that slidably engages with guide rail 22a2f of frame 22a2a is provided on the inside of frame 22a3a (the inner wall of left/right plate members 22a3a1 and 22a3a2). Fixed section 22a3c that is attached to and fixes slide belt 22a2e is provided on a lower section of right plate member 22a3a2 of frame 22a3a (refer to figs. 3b and 4c).

If slide motor 22a2b is driven, frame 22a2a of first slide section 22a2 extends along slide drive axis l2 with respect to frame 22a1b of slide base section 22a1 (the extended state shown in figs. 3a and 3b). At the same time, frame 22a3a of second slide section 22a3 extends with respect to frame 22a2a of first slide section 22a2 (the extended state shown in figs. 3a and 3b).

Conversely, if slide motor 22a2b is driven in the reverse direction, frame 22a2a of first slide section 22a2 contracts along slide drive axis 12 with respect to frame 22a1b of slide base section 22a1 (the contracted state shown in figs. 4a and 4c). At the same time, frame 22a3a of second slide section 22a3 contracts with respect to frame 22a2a of first slide section 22a2 (the contracted state shown in figs. 4a and 4c).

In this way, the base section side of first arm 22a is fixed to base 21, and the entire length of first arm 22a is expandable/contractable along slide drive axis 12.

The base section side of second arm 22b is fixed to the leading side of first arm 22a and holding section 23 is rotatably attached to the leading section side of first arm 22b via rotation drive axis 22b2. As shown in figs. 1 and 2, second arm 22b is formed in a substantially rectangular cuboid shape and is formed in an end section of second slide section 22a3 extending in a direction (forward direction) that is perpendicular to the lengthwise direction. Specifically, as shown in fig. 3a, second arm 22b is mainly provided with frame 22b1 configured from left/right plate members 22b1a and 22b1b. The rear end of left/right plate members 22b1a and 22b1b of frame 22b1 are respectively fixedly connected to an upper section of left/right plate members 22a3a1 and 22a3a2 of frame 22a3a.

Rotation drive axis 22b2 is rotatably provided on an end section of left/right plate members 22b1a and 22b1b of frame 22b1. Rotation motor 22b3 is provided on a center section of left/right plate members 22b1a and 22b1b. Rotation drive belt 22b4 is mounted around a pulley of rotation motor 22b3 and a pulley of rotation drive axis 22b2.

Third arm 22c is formed in a substantially rectangular cuboid shape and the base section thereof is attached to an end section of second arm 22b so as to be rotatable around rotation axis O. Specifically, third arm 22c is provided with frame 22c2. The rear end section of frame 22c2 is fixed so as to be rotated as one with rotation drive axis 22b2. The front end section of frame 22c2 is fixed to the rear end of holding section 23.

If rotation motor 22b3 is driven, frame 22c2, that is, third arm 22c, rotates around rotation axis O in an upward direction or a downward direction.

Holding section 23 is fixed to an end of third arm 22c. Holding section 23 is provided on the leading end side of robot arm 22, rotates and rotation drive axis 22b2, and assists the standing up and sitting down of care receiver M1 by supporting a body part (for example, the upper body, particularly, the chest) of care receiver M1. Note that, the body part of care receiver M1 that is held by holding section 23 is a held portion. For example, holding section 23 is a member that supports both arms (both armpits) of care receiver M1 from below when working opposite care receiver M1 during standing up motion and sitting down motion, and is formed in a U-shape which is open in the forward direction in a plan view. Holding section 23 is formed, for example, from a relatively soft material on the assumption that holding section 23 contacts care receiver M1.

As shown in figs.1 and 2, handle 24 is fixed to the upper surface of third arm 22c. Handle 24 is configured from a pair of left and right rod-shaped handgrips, and is provided such that the handgrips are to be gripped by the left and right hands of care receiver M1. Contact sensors 24a and 24b for detecting the grip are provided in handle 24. Leftward turning switch 24c for turning the care robot 20 to the left and rightward turning switch 24d for turning the care robot 20 to the right are provided in handle 24. Furthermore, stop switch 24e for stopping the care robot 20 is provided in handle 24.

In addition, in a case where care receiver M1 walks in a state being supported by holding section 23, or in a case where care receiver M1 walks in a state gripping handle 24, load sensor 22c1 for detecting the force received from care receiver M1 is provided in third arm 22c. Load sensor 22c1 is a sensor for detecting as a voltage change the distortion amount of a distortion generating body which changes according to a load change, or a semiconductor-type pressure sensor in which gauge resistance is changed and converted into an electrical signal according to the distortion which arises when pressure is applied to a silicon chip.

Operation device 25 is provided with display unit 25a that displays images and operation section 25b that receives input operations from an operator (a caregiver or care receiver M1).

Display section 25a is configured from a liquid crystal display, and displays a selection screen for operation modes of care robot 20 and so on. A standing up motion assistance mode for assisting a standing up motion of care receiver M1, a sitting down motion assistance mode for assisting a sitting motion care receiver M1, and so on, are set as operation modes.

Operation section 25b is provided with a cursor key for moving a cursor up/down/left/right, a cancel key for canceling inputs, and a determination key for determining selected content; the configuration is such that operator instructions can be entered using the keys. Operation unit 25 may be configured from a touch panel that has the display function of display section 25a and the input function of operation section 25b such that the device is operated by pressing the display on the touch panel.

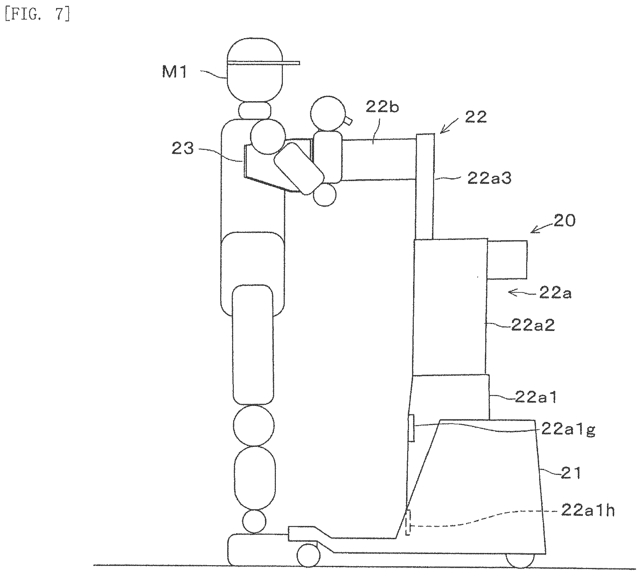

Storage device 26 (storage section) stores: standing up trajectory reference data that indicates a standing up trajectory along which a movement control position, for example shoulder position Ps, of care receiver M1 passes when a sitting care receiver M1 (refer to fig. 6) who is supported by holding section 23 stands up; and sitting down trajectory reference data that indicates a sitting down trajectory, which is different from the standing up trajectory, along which shoulder position Ps of care receiver M1 passes when a standing care receiver M1 (refer to fig. 7) who is supported by holding section 23 sits down.

As shown in fig. 6, care robot 20 is further advanced from the contact stopping position (shown in fig. 5), and care receiver M1 is positioned at the optimum position (standing up optimum position) for being stood up. That is, when the distance (measurement distance) Xc from knee sensor 22a1bg to the knee becomes Xc2, care robot 20 stops at the standing up optimum position. At this time, the total of the distance (measurement distance) Xc and distance Xe which is the X-axis coordinate portion from knee sensor 22a1g to a reference point of care robot 20, is the distance Xg0 between the position of the knee of care receiver M1 with respect to the reference point of care robot 20, that is, between the reference point and the knee position. Also, the total of the distance (measurement distance) Xd0 from foot sensor 22a1h to the foot, and distance Xf which is the X-axis coordinate portion from foot sensor 22a1h to a reference point of care robot 20, is the distance Xh0 between the position of the foot of care receiver M1 with respect to the reference point of care robot 20, that is, between the reference point and the foot position.

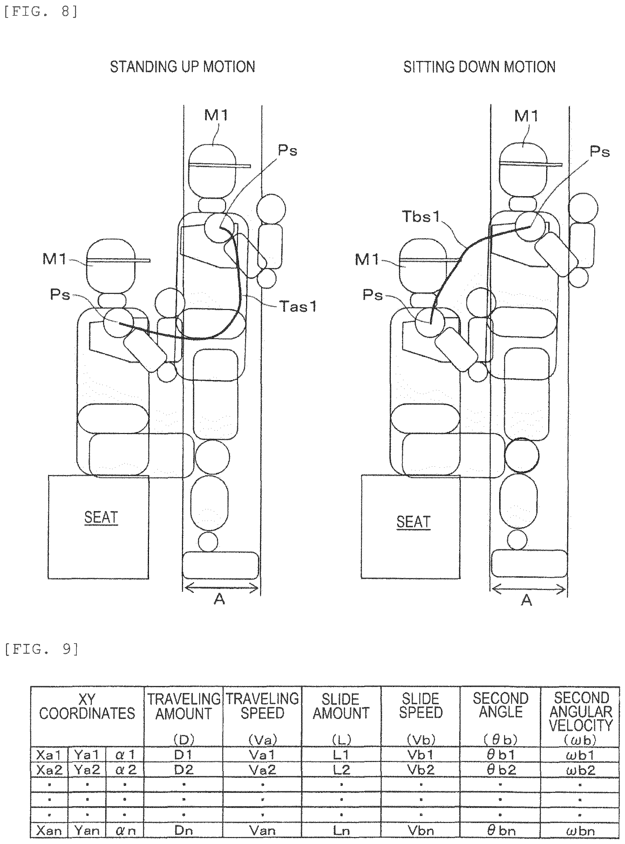

Standing up trajectory Tas1 and sitting down trajectory Tbs1 may be created by capturing images of actual standing up motion and creating the trajectories based on two-dimensional coordinates (for example, xy coordinates) of the shoulder position Ps. Standing up trajectory Tas1 is shown in fig. 8 (left side). Standing up trajectory Tas1 is based on the standing up trajectory reference data. Standing up trajectory reference data indicates a standing up trajectory through which movement control portion Ps of care receiver M1 passes in a case in which a knee (reference portion) of care receiver M1, which is a reference point of a stopping position of base 21, has a specific positional relationship with a foot position of care receiver M1 when care receiver M1 sitting on the seat stands up being supported by holding section 23. The specific positional relationship of the knee and foot position is when the angle of the knee is 90 degrees and the angle is positioned just about directly below the knee. Also, the specific positional relationship is decided in advance.

Sitting down trajectory Tbs1 is shown in fig. 8 (right side). Sitting down trajectory Tbs1 is based on the sitting down trajectory reference data. Note that, the standing up trajectory and the sitting down trajectory may be created by simulation.

Each trajectory reference data is created as two-dimensional coordinates. Standing up trajectory reference data is expressed, for example, as xy coordinates (Xa1, Ya1), ..., (Xan, Yan), where n is the quantity of coordinates. Sitting down trajectory reference data is expressed, for example, as xy coordinates (Xb1, Yb1), ..., (Xbn, Ybn), where n is the quantity of coordinates. The origin point may be the reference point of care robot 20, coordinates of a foot (ankle) when sitting, or any point on the seat surface of care receiver M1.

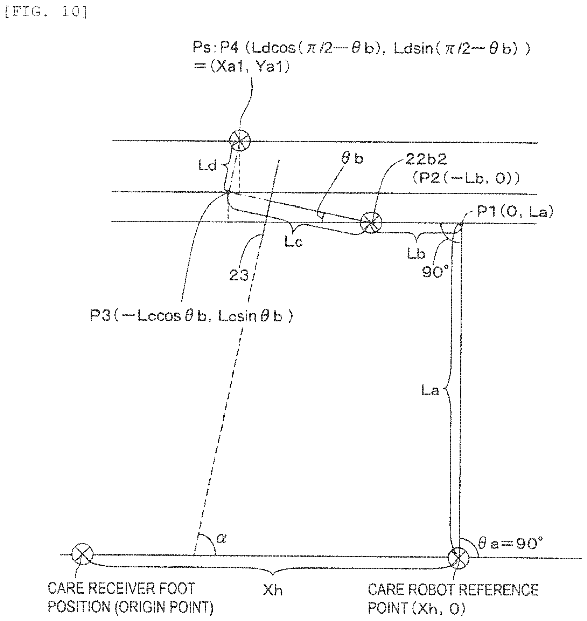

Trajectory reference data is preferably configured to include an angle α of holding section 23 for each coordinate in addition to the xy coordinates. The angle α of holding section 23 for each coordinate represents an angle of holding section 23 at each point in the standing up trajectory Tas1 and the sitting down trajectory Tbs1 (refer to fig. 10). The angle α is an angle which is formed by the upper body (inner wall surface of holding section 23 which contacts care receiver M1 so as to hold care receiver M1) of care receiver M1 and a horizontal plane (or the X-axis direction). For example, as shown in fig. 10, when care receiver M1 is in a sitting position or in a standing position, the angle α is 90 degrees. The trajectory reference data is expressed, for example, as (Xa1, Ya1, α1), ..., (Xan, Yan, an).

Note that, the trajectory reference data may be represented by robot coordinates instead of two-dimensional coordinates. In this case, standing up trajectory reference data is configured to include, for example, as shown in fig. 9, the traveling amount (D: rotation angle of left/right drive wheel motors 21g and 21h corresponding to the traveling amount) which is the movement amount of base 21 in the X-axis direction, the arm length (L: slide amount: rotation angle corresponding to the arm length) of slide motor 22a2b, and a second angle (θb) which is the rotation angle of rotation motor 22b3. Coordinates which include angle α of the XY coordinates (Xa1, Ya1, α1) are expressed as robot coordinates (D1, L1, θb1).

A method of calculating robot coordinates (D1, L1, θb1) from coordinates which include angle α of the XY coordinates (Xa1, Ya1, α1) is briefly described. Fig. 10 is a schematic side view showing lengths and angles of robot arm section 22. As shown in fig. 10, La (variable value) represents the length of the first arm 22a, Lb (fixed value) represents the length of the second arm 22b, and Lc (fixed value) and Ld (fixed value) respectively represent lengths from rotation drive axis 22b2 to shoulder position Ps along an extension direction of third arm 22c and along a direction perpendicular to the extension direction. Also, first angle θa (fixed, 90 degrees in the present embodiment) is an angle formed by first arm 22a and a horizontal line, an angle formed by first arm 22a and second arm 22b is 90 degrees, and second angle θb is an angle formed by second arm 22b and third arm 22c.

When a foot position of care receiver M1 is the origin point, the XY coordinates of the reference point of care robot 20 are (Xh, 0). Note that the Y coordinate of the foot position of care receiver M1 and the Y coordinate of the reference point of care robot 20 are the same. The XY coordinates of point P1, at which first arm 22a intersects second arm 22b, are obtained by adding (0, La) to the reference point care robot 20. The XY coordinates of point P2 indicative of rotation drive axis 22b2 are obtained by adding (-Lb, 0) to point P1. The XY coordinates of point P3 at which a perpendicular line extending from the shoulder point Ps intersects third arm 22c, are obtained by adding (-Lccosθb, Lcsinθb) to point P2. The XY coordinates of the shoulder position Ps, that is, point P4 are obtained by adding (Ldx (cos (n/2-θb), Ldx (sin (n/2-θb) to point P3. Note that, the angle α of holding section 23 for each coordinate is expressed as a=π/2-θb. According to the above, robot coordinates (D1, L1, θb1) are calculated from coordinates (Xa1, Ya1, α1) obtained by adding the angle α to the XY coordinates. In the same manner, robot coordinates (Dn, Ln, θbn) are calculated from the coordinates (Xan, Yan, an).

Note that, as shown in fig. 9, robot coordinates may be configured to include a traveling speed which is a movement speed in the X-axis direction of base 21 (Va: rotation angular velocity of left/right drive wheel motors 21g and 21h corresponding to this traveling speed), a slide speed of slide motor 22a2b (Vb: rotation rotation angular velocity corresponding to the slide velocity), and a second angular velocity (ωb) which is the angular velocity of the second angle (θb), that is, the rotation angle of rotation motor 22b3.

Reference standing up trajectory Tas1 shown in fig. 8 is a standing up trajectory which is a reference, and is a standing up trajectory through which movement control portion Ps of care receiver M1 passes in a case in which a knee (reference portion) of care receiver M1, which is a reference point of a stopping position of base 21, has a specific positional relationship with a foot position of care receiver M1 (in the present embodiment, the foot is directly below the knee [reference position]) when care receiver M1 sitting on the seat stands up being supported by holding section 23. Note that sitting down trajectory Tbs1 shown in fig. 8 is a sitting down trajectory which is a reference.

Further, storage device 26 stores a correction amount (first correction amount) according to the height of the seat such as a chair or a bed on which care receiver M1 sits. This first correction amount is a value for correcting each of the above data. Each of the above data is data when the height of the seat is a specified value (for example, 40 cm).

Also, storage device 26 stores a correction amount (second correction amount) according to the height of care receiver M1. The second correction amount is a value for correcting each of the above data. Each of the above data is data when the height of care receiver M1 is a specified value (for example, average height, specifically 170 cm).

The correction amounts above are stored as a map, but the correction amounts may be stored as calculation equations.

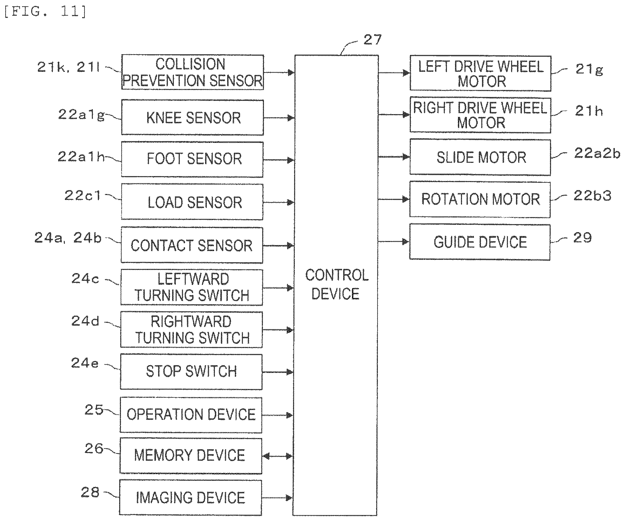

Control device 27 performs control related to traveling and posture changing of the care robot 20. As shown in fig. 11, the above collision prevention sensors 21k and 21l, knee sensor 22a1g, foot sensor 22a1h, load sensor 22c1, contact sensors 24a and 24b, leftward turning switch 24c, rightward turning switch 24d, stop switch 24e, left/right drive wheel motors 21g and 21h, first rotation motor 22a1c, slide motor 22a2b, rotation motor 22b3, operation device 25, storage device 26, imaging device 28, and guide device 29 are connected to control device 27. Also, control device 27 has a microcomputer (not shown); the microcomputer is provided with an input/output interface, CPU, RAM, and ROM (all not shown) that are connected to one another via a bus.

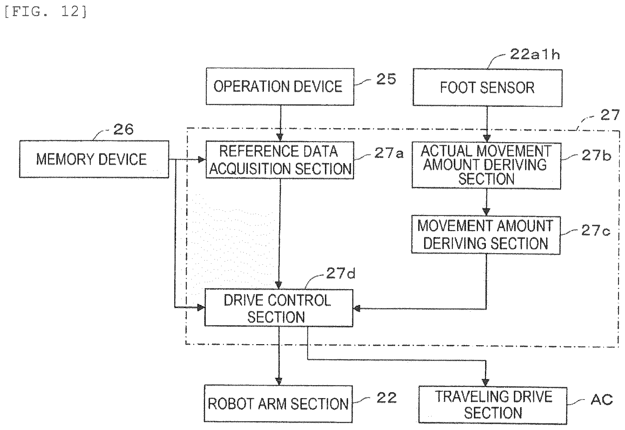

As shown in fig. 12, control device 27 is provided with reference data acquisition section 27a, actual movement amount deriving section 27b, movement amount difference deriving section 27c, and drive control section 27d.

Reference data acquisition section 27a acquires an operation mode (any one of a standing up motion assistance mode, a sitting down motion assistance mode, a motion series assistance mode) selected using operation device 25, and acquires reference data according to the acquired mode from storage device 26. Standing up trajectory reference data is acquired when in standing up motion assistance mode, sitting down trajectory reference data is acquired when in sitting down motion assistance mode, and standing up trajectory reference data and sitting down trajectory reference data are acquired when in motion series assistance mode.

Actual movement amount deriving section 27b derives the actual movement amount in the X-axis direction of base 21 (first axis direction movement amount) based on the distance from base 21 to an item that does move while care receiver M1 is standing up or sitting down (in the present embodiment, a foot of sitting care receiver M1) detected by foot sensor 22a1h (distance detecting sensor). Specifically, actual movement amount deriving section 27b stores distance Xd0, which is distance to the foot of care receiver M1 when care robot 20 is positioned at the standing up optimum position (when the distance to the knee of sitting care receiver M1 is specified distance Xc2), as an initial value. The difference between this initial value Xd0 and the distance Xdn to the foot of care receiver M1 measured at any point while care receiver M1 is standing up or sitting down is the actual movement amount in the X-axis direction of base 21.

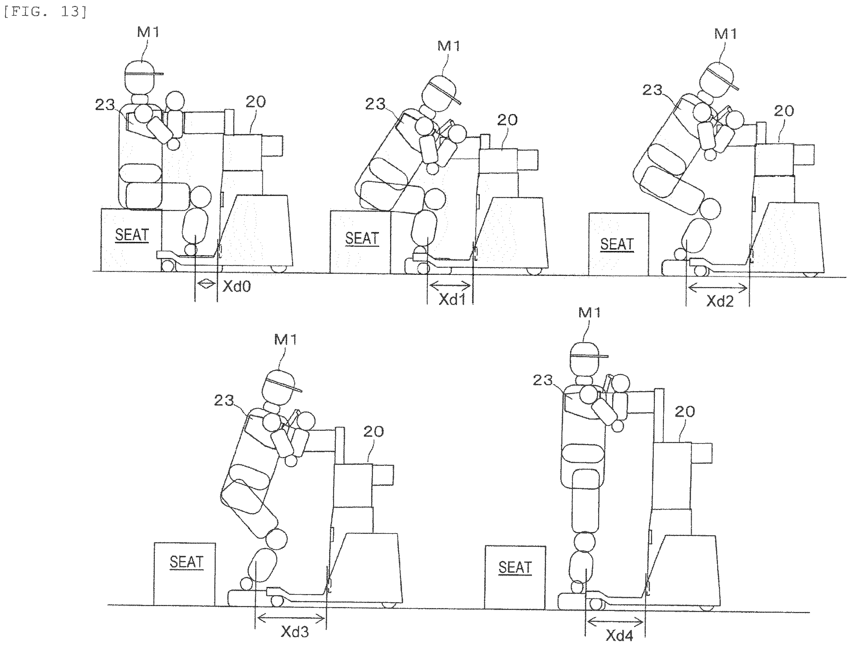

For example, as shown in fig. 13, the moving distance from the standing up motion starting point to the point at which the posterior of care receiver M1 lifts from the seat is the value calculated by subtracting distance Xd0 to the foot of care receiver at the standing up motion starting point from distance Xd1 to the foot of care receiver M1 at the point at which the posterior of care receiver M1 lifts from the seat.

Movement amount difference deriving section 27c derives the movement amount difference which is the difference between a target movement amount which is a movement amount in the X-axis direction (first axis direction movement amount) of traveling drive section AC (first drive section) derived based on at least one of standing up trajectory reference data and sitting down trajectory reference data, and the actual first axis direction movement amount of base 21 derived by actual movement amount deriving section 27b. In this way, movement amount difference deriving section 27c derives the movement distance using the actual movement amount in the X-axis direction of base 21 (first axis direction movement amount) derived by actual movement amount deriving section 27b. Note that, the target movement amount is, for example, the difference in traveling amounts which respectively correspond to two sets of XY coordinates of the standing up trajectory reference data.

Drive control section 27d performs control so as to drive traveling drive section AC (first drive section) so as to move base 21 in the first axis direction based on the standing up trajectory reference data and the sitting down trajectory reference data, and drives the robot arm drive section, which is configured from rotation motor 22b3 and slide motor 22a2a2b (second drive section and third drive section), to change the shape of robot arm 22. Also, drive control section 27d increases or decreases at least the drive instruction amount for traveling drive section AC (first drive section) such that the movement amount difference derived by movement amount difference deriving section 27c is compensated for.

Also, when each of the data items are stored while also including the angle α of holding section 23 at each point in the standing up trajectory Tas1 and the sitting down trajectory Tbs1. control device 27 (drive control section 27d) drives the second drive section (rotation motor 22b3) such that the angle of holding section 23 at each point is controlled to become the angle α stored in the standing up trajectory reference data and the sitting down trajectory reference data.

Also, control device 27 (drive control section 27d) adjusts the standing up trajectory Tas1 and the sitting down trajectory Tbs1 of robot arm section 22 in accordance with the body height of care receiver M1 or the height of the seat. The correction section corrects the reference data acquired by reference data acquisition section 27a based on the body height and height of the seat. Specifically, the correction section acquires the second correction amount corresponding to the acquired body height, or the first correction amount corresponding to the height of the seat from storage device 26. The correction section corrects the reference data acquired by reference data acquisition section 27a based on each acquired correction amount and outputs the corrected data to drive control section 27d. Drive control section 27d drives traveling drive section AC (first drive section), and rotation motor 22b3 and slide motor 22a2b (second drive section and third drive section) based on the corrected reference data.

Imaging device 28 is provided respectively on the front surface of slide base section 22a1 and the rear surface of first slide section 22a2. Imaging device 28 provided on the front surface of slide base section 22a1 images a target in front of care robot 20. Imaging device 28 provided on the rear surface of first slide section 22a2 images a target behind or above care robot 20.

Guide device 29 provides guidance to people, including care receiver M1 and a caregiver, in the vicinity regarding the state of care robot 20 using sound or a display. Guide device 29 may be a speaker for outputting sound, or a display device such as an LCD or an LED for displaying characters or graphics and the like.

Next, the operation of care robot 20 configured as given above will be described. First, a case will be described in which care robot 20 comes close to a sitting care receiver M1. At this time, care robot 20 is, for example, approaching care receiver M1 who is sat on a bed. Care robot 20 advances with the front surface of care robot 20 facing in the traveling direction. Care robot 20 reads a guiding mark provided in the vicinity of care receiver M1 using imaging device 28 in the front surface of care robot 20, and approaches care receiver M1 based on the information. Care robot 20 uses a detection result (distance between care robot 20 and a knee of care receiver M1) of knee sensor 22a1g, and moves to a specified position where the distance from sitting care receiver M1 becomes specified distance Xc1 (refer to fig. 5).

Then, care robot 20 moves (advances) to an optimum position (standing up optimum position) for standing up care receiver M1 (refer to fig. 6).

Then, care robot 20 gives the guidance "Grip the handle" to care receiver M1. If care receiver M1 grips both handles, the fact that handle 24 has been gripped is detected by contact sensors 24a and 24b, thus care robot 20 performs standing up motion for allowing the care receiver M1 to stand up.

If a standing up operation starts, care robot 20 holds the upper body of sitting care receiver M1 using holding section 23 (refer to fig. 6). Then, while holding the upper body of care receiver M1, care robot 20 stands the care receiver M1 up (refer to fig. 10). More specifically, as shown in fig. 8, the standing up motion is performed along the reference standing up trajectory.

A standing up motion of care robot 20 at this time will be described with reference to fig. 13. In fig. 13, the standing up motion is shown from the top left to the bottom right. The top left shows the starting point of the standing up motion. At this time, distance Xd to the foot of care receiver M1 at the standing up motion starting point is Xd0. Further, distance Xd to the foot of care receiver M1 at the point at which the posterior of care receiver M1 lifts from the seat (the upper central diagram) is Xd1. In the upper right diagram, distance Xd to the foot of care receiver M1 is Xd2, and in the lower left diagram, distance Xd to the foot of care receiver M1 is Xd3. Finally, at the standing up motion finishing point (the bottom right diagram), distance Xd to the foot of care receiver M1 is Xd4. As will become apparent, distance Xd to the foot of care receiver M1 corresponds to the X-axis component of the change amount of standing ip trajectory Tas1 shown in fig. 8.

Also, in a case in which left/right drive wheels 21e and 21f slip during standing up motion, as given above, the drive instruction amount of traveling drive section AC (first drive section) is increased or decreased to compensate for the movement amount difference (slip amount) derived by the movement amount difference deriving section 27c.

Care robot 20 assists care receiver M1 in a standing up state. Care receiver M1 moves by walking in a state supported by holding section 23 supporting the arms of care receiver M1 from below. Care robot 20 advances with the rear surface of care robot 20 facing in the traveling direction.

And, if a sitting down operation for sitting care receiver M1 down starts, care robot 20 brings care receiver M1 in a standing up state (refer to fig. 7) into a sitting down state while the upper body of care receiver M1 is held by holding section 23 (refer to fig. 6). More specifically, as shown in fig. 8, the sitting down motion is performed along the sitting down trajectory.

Then, when the sitting down motion ends, care robot 20 gives the guidance "Let go of the handle" to care receiver M1. If care receiver M1 lets go of handle 24, contact sensors 24a and 24b detect the fact that the hands have let go of handle 24, thus, care robot 20 moves away from care receiver M1.

Care robot 20 of the present embodiment comprises: base 21 that travels along an X-axis direction (a first axis direction) using traveling drive section AC (first drive section); robot arm section 22 that is provided on base 21 and includes rotation drive axis 22b2 and slide drive axis l2 (second drive axis and third drive axis) which are independently driven by rotation motor 22b3 and slide motor 22a2b (second drive section and third drive section), wherein at least one of rotation drive axis 22b2 and slide drive axis l2 (second drive axis and third drive axis) is rotation drive axis 22b2 (rotation drive axis) that is rotated around a rotation axis extending in a horizontal direction by rotation motor 22b3 (second drive section); holding section 23 that is provided on an end of robot arm section 22, rotates around rotation drive axis O, and assists care receiver M1 to stand up or sit down by supporting a body part of the care receiver M1; storage section 26 that stores standing up trajectory reference data which indicates the standing up trajectory Tas1 along which movement control portion Ps (for example, shoulder position) of care receiver M1 passes when care receiver M1 sitting on a seat stands up being supported by holding section 23, and sitting down trajectory reference data which indicates the sitting down trajectory Tbs1 along which movement control portion Ps of care receiver M1 passes when stood up care receiver M1 sits down being supported by holding section 23; and drive control section 27d that controls traveling drive section AC (first drive section) so as to move base 21 along the X-axis direction (first axis direction), and controls rotation motor 22b3 and slide motor 22a2b (second drive section and third drive section) so as to change the shape of robot arm section 22, based on the standing up trajectory reference data and the sitting down trajectory reference data.

According to this, because it is easy to set standing up trajectory reference data as data corresponding to the standing up trajectory of a healthy person, in a case in which care receiver M1 is stood up such that movement control portion Ps of care receiver M1 passes along standing up trajectory Tas1, it is possible to drive traveling drive section AC (first drive section) so as to move base 21 along the X-axis direction (first axis direction), and to drive the second drive section and third drive section so as to change the shape of robot arm section 22, based on standing up trajectory reference data corresponding to the standing up trajectory of a healthy person. Accordingly, care receiver M1 is assisted to stand up with the same feeling as when care receiver M1 stands up without assistance. Thus, care receiver M1 is stood up without discomfort.

On the other hand, although in general a sitting down trajectory of a healthy differs from a standing up trajectory, because it is easy to set sitting down trajectory reference data as data corresponding to the sitting down trajectory of a healthy person, in a case in which care receiver M1 is sat down such that movement control portion Ps of care receiver M1 passes along sitting down trajectory Tbs1. it is possible to drive traveling drive section AC (first drive section) so as to move base 21 along the X-axis direction (first axis direction), and to drive rotation motor 22b3 and slide motor 22a2b (second drive section and third drive section) so as to change the shape of robot arm section 22, based on sitting down trajectory reference data corresponding to the sitting down trajectory of a healthy person. Accordingly, care receiver M1 is assisted to sit down with the same feeling as when care receiver M1 sits down without assistance. Thus, care receiver M1 is sat down without discomfort.

Thus, a care robot is provided that stands up and sits down care receiver M1 without causing discomfort, without increasing the drive axes of care robot 20, and without leading to increased cost or size of care robot 20.

Further, because holding section 23 assists the standing up and sitting down of care receiver M1 by supporting a body part (the upper body, particularly, the chest) of care receiver M1 and rotating around a rotation drive axis, it is possible to optimally set angle α of the driven portion of care receiver M1 (the upper body, particularly, the chest) that moves with holding section 23 at each position on standing up trajectory Tas1 and sitting down trajectory Tbs1. Thus, care receiver M1 is stood up and sat down more comfortably (with a natural feeling).

Also, with care robot 20 of the above embodiment, rotation drive axis 22b2 and slide drive axis 12 (second drive axis and third drive axis) provided on robot arm section 22 are respectively a rotation drive axis that is rotated around rotation axis O which extends in a horizontal direction using the second drive section (rotation motor 22b3), and slide drive axis l2 that moves a driven body (second arm 22b and holding section 23) back and forth using slide motor 22a2b (third drive section) along a second axis direction (Y-axis direction in the present embodiment) extending on the upper side of the base at a specified angle (90 degrees in the present embodiment) to the X-axis direction (first axis direction). According to this, compared to a configuration in which both the second drive axis and the third drive axis are configured from a rotation drive axis, movement of the center of gravity of care robot 20 in the forward/back direction as robot arm section 22 moves can be eliminated. Thus, the length in the forward/back direction of care robot 20 can be curtailed, and care robot 20 can be made compact.

Also, with care robot 20 of the above embodiment, robot arm section 22 is provided with first arm 22a, with a base section side which is fixed to base 21, that is capable of having its length expanded/contracted along slide drive axis 12, and second arm 22b with a base section side fixed to the leading side of first arm 22a and a leading end section on which holding section 23 is rotatably provided via rotation drive axis 22b2.

According to this, care robot 20 can support care receivers M1 with different heights by expanding and contracting first robot arm 22a, and care robot 20 can be stored in a compact manner by retracting first robot arm 22a when care robot 20 is not assisting care receiver M1 to stand up or sit down.

Also, care robot 20 of the above embodiment is further provided with movement amount difference deriving section 27c that derives a movement amount difference, which is the difference between a target movement amount which is the X-axis direction movement amount (first axis direction movement amount) of traveling drive section AC (first drive section) derived based on at least one of the standing up trajectory reference data and the sitting down trajectory reference data, and the actual X-axis direction movement amount (first axis direction movement) amount of base 21; and drive control section 27d increases or decreases at least the drive instruction amount of traveling drive section AC (first drive section) such that the movement amount difference derived by movement amount difference deriving section 27c is compensated for.

According to this, in a case in which left/right drive wheels 21e and 21f that are rotated by traveling drive section AC (first drive section) slip, because that slip amount can be corrected reliably, care receiver M1 can be stood up and sat down reliable along standing up trajectory Tas1 and sitting down trajectory Tbs1.

Also, care robot 20 of the above embodiment is further provided with a distance detecting sensor (foot sensor 22a1h) that detects the distance from base 21 to an item that does not move while care receiver M1 is standing up or sitting down (in the present embodiment, a foot of care receiver M1), and actual movement amount deriving section 27c that derives the actual X-axis direction movement amount (first axis direction movement direction amount) of base 21 from the distance from base 21 to the item that does not move detected by the distance detecting sensor (foot sensor 22a1h); and movement amount difference deriving section 27c derives the movement amount difference using the actual X-axis direction movement amount (first axis movement amount) of base 21 derived by actual movement amount deriving section 27b.

According to this, in a case in which left/right drive wheels 21e and 21f that are rotated by traveling drive section AC (first drive section) slip, because the X-axis direction movement amount (first axis direction movement amount) can be derived reliably, the slip amount can be corrected reliably.

Also, with care robot 20 of the above embodiment, the item that does not move is a foot of sitting care receiver M1, and the distance detecting sensor is a detection sensor (foot sensor 22a1h) that detects the distance to the foot of care receiver M1.

According to this, because the distance to the foot of care receiver M1, which is relatively close to care robot 20, is detected, a detection error amount is curtailed as far as possible, such that the X-axis direction movement amount (first axis direction movement amount) can be derived accurately.

Also, with care robot of the above embodiment, standing up trajectory reference data and sitting down trajectory reference data are stored together with angle α of holding section 23 for each point of standing up trajectory Tas1 and sitting down trajectory Tbs1. and control device 27d drives the drive section (rotation motor 22b3) such that angle α of holding section 23 at each point is controlled to become the angle α stored in the standing up trajectory reference data and the sitting down trajectory reference data.

According to this, because angle α of the held portion of care receiver M1 that moves with holding section 23 can be optimally set for each position of standing up trajectory Tas1 and sitting down trajectory Tbs1. care receiver M1 is stood up and sat down more comfortably (with a natural feeling).

Note that, in the above embodiment, at least one of the second drive section and the third drive section is a rotation drive axis that is rotated around rotation axis O which extends in a horizontal direction using the second drive section, but both the second drive axis and the third drive axis may be configured from a rotation drive axis that is rotated around separate rotation axes using the second drive section and the third drive section. Here, it is desirable for the third drive axis to be set as a rotation drive axis that makes a base section of first arm 22a a rotation axis. The X-axis component of the standing up trajectory and the sitting down trajectory is not just the movement amount (drive amount) of traveling drive section AC (first drive section), but is formed from a value to which the X-axis component of the drive amount of the second drive section and the third drive section has been added.

Also, in a case in which left/right drive wheels 21e and 21f slip during standing up motion, as given above, the drive instruction amount of not just traveling drive section AC (first drive section), but also of the second drive section and the third drive section, is increased or decreased to compensate for the movement amount difference (slip amount) derived by the movement amount difference deriving section 27c.

Also, with the above embodiment, for the distance detecting sensor that detects the distance from base 21 to an item that does not move while care receiver M1 is standing up or sitting down, foot sensor 22a1h that detects the distance to a foot of care receiver M1 is used, but the distance detecting sensor is not limited to this and a detecting sensor that detects the distance to the seat, or a detecting sensor that detects the distance to, for example, a wall of the room, may be used.

### Reference Signs List

20: care robot; 21: base; 21g, 21h: left/right drive wheel motor (drive source); 22: robot arm section; 22a: first arm; 22a2b: slide motor (third drive section); 22b: second arm; 22b3: rotation motor (second drive section); 22c: third arm; 23: holding section; 24: handle; 25: operation device; 26: storage device (storage section); 27: control device; 27a: reference data acquisition section; 27b: actual movement amount deriving section; 27c: movement amount difference deriving section; 27d: drive control section; 28: imaging device; 29: guide device; AC: traveling drive section (first drive section) M1: care receiver

## Claims

1. A care robot (20) comprising:
a base (21) that travels along a first axis direction using a first drive section (AC);
a robot arm section (22) that is provided on the base (21) and includes a second drive axis (22b2) and a third drive axis (12) which are independently driven by a second drive section (22b3) and a third drive section (22a2b), wherein at least one of the second drive axis (22b2) and the third drive axis (12) is a rotation drive axis (22b2) that is rotated around a rotation axis extending in a horizontal direction by the second drive section (22b3);
a holding section (23) that is provided on an end of the robot arm section (22), rotates around the rotation drive axis (22b2), and assists a care receiver (M1) to stand up or sit down by supporting a body part of the care receiver (M1);
a storage section (26) that stores standing up trajectory reference data which indicates the standing up trajectory (Tas1) along which a movement control portion (Ps) of the care receiver (M1) passes when the care receiver (M1) sitting on a seat stands up being supported by the holding section (23), and sitting down trajectory reference data which indicates the sitting down trajectory (Tbs1) along which a movement control portion (Ps) of the care receiver (M1) passes when the stood up care receiver (M1) sits down being supported by the holding section (23); and
a drive control section (27d) that controls the first drive section (AC) so as to move the base (21) along the first axis direction, and simultaneously controls the second drive section (22b3) and the third drive section (22a2b) so as to change the shape of the robot arm section (22), based on the standing up trajectory reference data and the sitting down trajectory reference data.

2. The care robot (20) according to claim 1,
wherein the second drive axis (22b2) and the third drive axis (12) provided on the robot arm section (22) are respectively the rotation drive axis that rotates around a rotation axis (O) which extends in a horizontal direction with respect to the second drive section (22b3), and a slide drive axis (12) that moves a driven body (22b, 23) back and forth with respect to the third drive section (22a2b) along a second axis direction extending on the upper side of the base (21) at a specified angle to the first axis direction.

3. The care robot (20) according to claim 2,
wherein the robot arm section (22) comprises
a first arm (22a), with a base section side which is fixed to the base (21), that is capable of having its length expanded/contracted along the slide drive axis (12), and
a second arm (22b) with a base section side fixed to the leading side of the first arm (22a) and a leading end section on which the holding section (23) is rotatably provided via the rotation drive axis (22b2).

4. The care robot (20) according to any one of claims 1 to 3, further comprising
a movement amount difference deriving section (27c) that derives a movement amount difference, which is the difference between a target movement amount which is the first axis direction movement amount of the first drive section (AC) derived based on at least one of the standing up trajectory reference data and the sitting down trajectory reference data, and the actual first axis direction movement amount of the base (21),
wherein the drive control section (27d) increases or decreases at least the drive instruction amount of the first drive section (AC) such that the movement amount difference derived by the movement amount difference deriving section (27c) is compensated for.

5. The care robot (20) according to claim 4, further comprising
a distance detecting sensor (22a1h) that detects the distance from the base (21) to an item that does not move while the care receiver (M1) is standing up or sitting down, and an actual movement amount deriving section (27b) that derives the actual first axis direction movement direction amount of the base (21) from the distance from the base (21) to the item that does not move detected by the distance detecting sensor (22a1 h), wherein the movement amount difference deriving section (27c) derives the movement amount difference using the actual first axis movement amount of the base (21) derived by the actual movement amount deriving section (27b).

6. The care robot (20) according to claim 5,
wherein the item that does not move is a foot of care receiver (M1) who is sitting, and the distance detection section is a detection sensor (22a1h) that detects the distance to the foot of the care receiver (M1).

7. The care robot (20) according to any one of claims 1 to 6,
wherein the standing up trajectory reference data and the sitting down trajectory reference data are stored along with an angle of the holding section (23) at each point of the standing up trajectory (Tas1) and the sitting down trajectory (Tbs1), and
wherein the drive control section (27d) drives the drive section (22b3) so as to control the angle of the holding section (23) at each of the points to be the angle respectively recorded in the standing up trajectory reference data and the sitting down trajectory reference data.

## Patentansprüche

1. Pflegeroboter (20) umfassend:
eine Basis (21), die sich entlang einer ersten Achsrichtung mit Hilfe eines ersten Antriebsabschnitts (AC) bewegt;
einen Roboterarmabschnitt (22), der an der Basis (21) vorgesehen ist und eine zweite Antriebsachse (22b2) sowie eine dritte Antriebsachse (12) aufweist, die unabhängig von einem zweiten Antriebsabschnitt (22b3) und einem dritten Antriebsabschnitt (22a2b) angetrieben werden, wobei wenigstens eine von der zweiten Antriebsachse (22b2) und der dritten Antriebsachse (12) eine Drehantriebsachse (22b2) ist, die um eine Drehachse, die sich in einer horizontalen Richtung erstreckt, durch den zweiten Antriebsabschnitt (22b3) gedreht wird;
einen Halteabschnitt (23), der an einem Ende des Roboterarmabschnitts (22) vorgesehen ist, sich um die Drehantriebsachse (22b2) dreht und einen Pflegeempfänger (M1) beim Aufstehen oder Hinsetzen durch Abstützen eines Körperteils des Pflegeempfängers (M1) unterstützt;
einen Speicherabschnitt (26), der Aufstehtrajektorien-Bezugsdaten speichert, die die Aufstehtrajektorie (Tas1) angeben, entlang derer ein Bewegungssteuerabschnitt (Ps) des Pflegeempfängers (M 1) verläuft, wenn der Pflegeempfänger (M1), der auf einem Sitz sitzt, aufsteht, wobei er von dem Halteabschnitt (23) gehalten wird, und Niedersetztrajektorien-Bezugsdaten speichert, die eine Niedersetztrajektorie (Tbs 1) angeben, entlang derer ein Bewegungssteuerabschnitt (Ps) des Pflegeempfängers (M1) verläuft, wenn sich der aufrecht stehende Pflegeempfänger (M1) setzt und von dem Halteabschnitt (23) gehalten wird; und
einen Antriebssteuerabschnitt (27d), der den ersten Antriebsabschnitt (AC) so steuert, dass er die Basis (21) entlang der ersten Achsrichtung bewegt, und gleichzeitig den zweiten Antriebsabschnitt (22b3) sowie den dritten Antriebsabschnitt (22a2b) steuert, um die Form des Roboterarmabschnitts (22) zu ändern, basierend auf den Aufstehtrajektorien-Bezugsdaten und den Niedersetztrajektorien-Bezugsdaten.

2. Pflegeroboter (20) nach Anspruch 1,
bei dem die zweite Antriebsachse (22b2) und die dritte Antriebsachse (12), die an dem Roboterarmabschnitt (22) vorgesehen sind, die Drehantriebsachse, die sich um eine Drehachse (O) dreht, die sich in einer horizontalen Richtung in Bezug auf den zweiten Antriebsabschnitt (22b3) erstreckt, bzw. eine Gleitantriebsachse (12) sind, die einen angetriebenen Körper (22b, 23) in Bezug auf den dritten Antriebsabschnitt (22a2b) entlang einer zweiten Achsrichtung, die sich auf der Oberseite der Basis (21) in einem festgelegten Winkel zu der ersten Achsrichtung erstreckt, vor und zurück bewegt.

3. Pflegeroboter (20) nach Anspruch 2,
bei dem der Roboterarmabschnitt (22) umfasst:
einen ersten Arm (22a) mit einer Basisabschnittseite, die an der Basis (21) befestigt ist, deren Länge entlang der Gleitantriebsachse (12) ausgefahren/zusammengezogen werden kann; und
einen zweiten Arm (22b) mit einer Basisabschnittsseite, die an der Vorderseite des ersten Arms (22a) befestigt ist, und einem vorderen Endabschnitt, an dem der Halteabschnitt (23) drehbar über die Drehantriebsachse (22b2) vorgesehen ist.

4. Pflegeroboter (20) nach einem der Ansprüche 1 bis 3, weiterhin umfassend:
einen Bewegungsumfangsdifferenz-Ableitabschnitt (27c), der eine Bewegungsumfangsdifferenz ableitet, die die Differenz zwischen einem Sollbewegungsumfang, der der erste Achsrichtungsbewegungsumfang des ersten Antriebsabschnitts (AC) ist, der basierend auf den Aufstehtrajektorien-Bezugsdaten und/oder den Niedersetztrajektorien-Bezugsdaten abgeleitet ist, und dem tatsächlichen ersten Achsrichtungs-Bewegungsumfang der Basis (21) ist,
wobei der Antriebssteuerabschnitt (27d) wenigstens den Antriebsbewegungsumfang des ersten Antriebsabschnitts (AC) erhöht oder verringert, so dass die Bewegungsumfangsdifferenz, die durch den Bewegungsumfangsdifferenz-Ableitabschnitt (27c) abgeleitet wird, kompensiert wird.

5. Pflegeroboter (20) nach Anspruch 4, weiterhin umfassend:
einen Abstandserfassungssensor (22a1h), der den Abstand von der Basis (21) zu einem Gegenstand erfasst, der sich nicht bewegt, während der Pflegeempfänger (M1) aufsteht oder sich niedersetzt, und einen Abschnitt (27b) zum Ableiten des tatsächlichen Bewegungsumfangs, der den tatsächlichen ersten Achsrichtungsbewegungsrichtungsumfang der Basis (21) aus dem Abstand von der Basis (21) zu dem Gegenstand, der sich nicht bewegt, der durch den Abstandserfassungssensor (22a1h) erfasst wird, ableitet, wobei der Bewegungsumfangsdifferenz-Ableitungsabschnitt (27c) die Bewegungsumfangsdifferenz mit Hilfe des tatsächlichen ersten Achsbewegungsumfangs der Basis (21) ableitet, der durch den Abschnitt (27b) zum Ableiten des tatsächlichen Bewegungsumfangs abgeleitet wird.

6. Pflegeroboter (20) nach Anspruch 5,
bei dem der Gegenstand, der sich nicht bewegt, ein Fuß des Pflegeempfängers (M1) ist, der sitzt, und der Abstandserfassungsabschnitt ein Erfassungssensor (22a1h) ist, der den Abstand zu dem Fuß des Pflegeempfängers (M1) erfasst.

7. Pflegeroboter (20) nach einem der Ansprüche 1 bis 6,
bei dem die Aufstehtrajektorien-Bezugsdaten und die Niedersetztrajektorien-Bezugsdaten zusammen mit einem Winkel des Halteabschnitts (23) an jedem Punkt der Aufstehtrajektorie (Tas1) und der Niedersetztrajektorie (Tbs1) gespeichert werden, und
der Antriebssteuerabschnitt (27d) den Antriebsabschnitt (22b3) antreibt, um den Winkel des Halteabschnitts (23) an jedem der Punkte derart zu steuern, dass er der Winkel ist, der jeweils in den Aufstehtrajektorien-Bezugsdaten und den Niedersetztrajektorien-Bezugsdaten gespeichert ist.

## Revendications

1. Robot de soin (20) comprenant :
une base (21) qui se déplace le long d'un premier sens d'axe utilisant une première section d'entraînement (AC) ;
une section de bras de robot (22) qui est prévue sur la base (21) et qui comprend un second axe d'entraînement (22b2) et un troisième axe d'entraînement (I2) qui sont indépendamment entraînés par une seconde section d'entraînement (22b3) et une troisième section d'entraînement (22a2b), où au moins l'un du second axe d'entraînement (22b2) et du troisième axe d'entraînement (I2) est un axe d'entraînement par rotation (22b2) qui tourne autour d'un axe de rotation s'étendant dans un sens horizontal par la seconde section d'entraînement (22b3) ;
une section de maintien (23) qui est prévue sur une extrémité de la section de bras de robot (22), qui tourne autour de l'axe d'entraînement par rotation (22b2), et qui aide un bénéficiaire de soin (M1) à se tenir debout ou assis en soutenant une partie corporelle du bénéficiaire de soin (M1) ;
une section de stockage (26) qui stocke les données de référence de trajectoire de position debout qui indiquent la trajectoire de position debout (Tas1) le long de laquelle une partie de commande de mouvement (Ps) du bénéficiaire de soin (M1) passe lorsque le bénéficiaire de soin (M1) assis sur un siège se lève en étant soutenu par la section de maintien (23), et des données de référence de trajectoire de position assise qui indiquent la trajectoire de position assise (Tbs1) le long de laquelle une partie de commande de mouvement (Ps) du bénéficiaire de soin (M1) passe lorsque le bénéficiaire de soin debout (M1) s'assied en étant soutenu par la section de maintien (23) ; et
une section de commande d'entraînement (27d) qui commande la première section d'entraînement (AC) afin de déplacer la base (21) le long du premier sens d'axe, et contrôle simultanément la seconde section d'entraînement (22b3) et la troisième section d'entraînement (22a2b) afin de changer la forme de la section de bras de robot (22), sur la base des données de référence de trajectoire de position debout et des données de référence de trajectoire de position assise.

2. Robot de soin (20) selon la revendication 1, dans lequel le second axe d'entraînement (22b2) et le troisième axe d'entraînement (I2) prévu sur la section de bras de robot (22) sont respectivement l'axe d'entraînement par rotation qui tourne autour d'un axe de rotation (0) qui s'étend dans un sens horizontal par rapport à la seconde section d'entraînement (22b3), et un axe d'entraînement coulissant (I2) qui déplace un corps entraîné (22b, 23) vers l'arrière et vers l'avant par rapport à la troisième section d'entraînement (22a2b) le long d'un second sens d'axe s'étendant sur le côté supérieur de la base (21) sous un angle spécifié par rapport au premier sens d'axe.

3. Robot de soin (20) selon la revendication 2,
dans lequel la section de bras de robot (22) comprend
un premier bras (22a), avec un côté section de base qui est fixé à la base (21), qui est capable d'avoir sa longueur expansée/contractée le long de l'axe d'entraînement coulissant (I2), et
un second bras (22b) avec un côté section de base fixé au côté directeur du premier bras (22a) et une section d'extrémité directrice sur laquelle la section de maintien (23) est prévue de manière à pouvoir tourner par l'intermédiaire de l'axe d'entraînement par rotation (22b2).

4. Robot de soin (20) selon l'une quelconque des revendications 1 à 3, comprenant en outre
une section dérivant d'une différence de quantité de mouvement (27c) qui fait dériver une différence de quantité de mouvement, qui est la différence entre une quantité de mouvement cible qui est la quantité de mouvement de premier sens d'axe de la première section d'entraînement (AC) dérivée sur la base d'au moins l'une des données de référence de trajectoire de position debout et des données de référence de trajectoire de position assise, et la quantité de mouvement de premier sens d'axe réelle de la base (21),
où la section de commande d'entraînement (27d) augmente ou réduit au moins la quantité d'instruction d'entraînement de la première section d'entraînement (AC) de sorte que la différence de quantité de mouvement dérivée de la section dérivant de la différence de quantité de mouvement (27c) en soit compensée.

5. Robot de soin (20) selon la revendication 4, comprenant en outre
un capteur de détection de distance (22a1h) qui détecte la distance depuis la base (21) vers un article qui ne se déplace pas lorsque le bénéficiaire de soin (M1) se tient debout ou assis, et une section dérivant de la quantité de mouvement réelle (27b) qui fait dériver la quantité de mouvement de premier sens d'axe réelle de la base (21) à partir de la distance depuis la base (21) vers l'élément qui ne se déplace pas détecté par le capteur de détection de distance (22a1h),
où la section dérivant de la différence de quantité de mouvement (27c) fait dériver la différence de quantité de mouvement en utilisant la quantité de mouvement de premier sens d'axe réelle de la base (21) dérivée par la section dérivant de la quantité de mouvement réelle (27b).

6. Robot de soin (20) selon la revendication 5,
dans lequel l'élément qui ne se déplace pas est un pied du bénéficiaire de soin (M1) qui est assis, et
la section de détection de distance est un capteur de détection (22a1h) qui détecte la distance vers le pied du bénéficiaire de soin (M1).

7. Robot de soin (20) selon l'une quelconque des revendications 1 à 6,
dans lequel les données de référence de trajectoire de position debout et les données de référence de trajectoire de position assise sont stockées le long d'un angle de la section de maintien (23) à chaque point de la trajectoire de position debout (Tas1) et de la trajectoire de position assise (Tbs1), et
où la section de commande d'entraînement (27d) entraîne la section d'entraînement (22b3) afin de contrôler l'angle de la section de maintien (23) à chacun des points pour qu'il soit l'angle respectivement enregistré dans les données de référence de trajectoire de position debout et les données de référence de trajectoire de position assise.
